# EUROPÄISCHE PATENTANMELDUNG

(11) **EP 4 748 552 A1**
(43) Veröffentlichungstag der Anmeldung: **27.05.2026**
(21) Anmeldenummer: 24214666.0
(22) Anmeldetag: 21.11.2024
(51) Int. Cl.: B29C 51/10, B29C 51/16, B29C 44/02, B29C 51/02, B29K 25/00, B29K 105/04, B29L 9/00, B29L 31/10, B29L 31/00, B32B 5/18, B32B 27/06

(54) **VERFAHREN ZUR HERSTELLUNG EINES VERBUNDKÖRPERS SOWIE VERBUNDKÖRPER**

(71) Anmelder: Tronco Vermögensverwaltungs GmbH & Co. KG, 65193 Wiesbaden (DE)
(72) Erfinder: Die Erfindernennung liegt noch nicht vor
(74) Vertreter: Tergau & Walkenhorst Intellectual Property GmbH

(57) **Zusammenfassung**

Ein Verfahren zur Herstellung eines Verbundkörpers (1), der einen Grundkörper (2) und ein an diesem angeordnetes Funktionselement (4) umfasst, soll eine besonders vereinfachte und effiziente Herstellung eines solchen Verbundkörpers (1) ermöglichen. Dazu wird erfindungsgemäß das Funktionselement (4) in seiner Form durch Tiefziehen an den Grundkörper (2) angepasst, wobei der Grundkörper (2) als Tiefzieh-Werkzeug bei der formenden Bearbeitung des Funktionselements (4) verwendet wird.

## Beschreibung

Die Erfindung betrifft ein Verfahren zur Herstellung eines Verbundkörpers, der einen Grundkörper und ein an diesem angeordnetes Funktionselement umfasst, wobei das Funktionselement durch Tiefziehen in eine gewünschte Form gebracht wird. Sie bezieht sich weiter auf einen mit einem solchen Verfahren erhältlichen Verbundkörper.

Verbundkörper dieser Art kommen in vielseitigen Anwendungen zum Einsatz. Beispielsweise kann für Fußbodenheizungen vorgesehen sein, die das Heizmedium im Bodenbereich führenden Rohre oder Heizschlangen in oder auf einer Isolationsschicht zu führen, insbesondere zur Wärme- und/oder Trittschallisolation. Dabei können geeignete Formkörper zur Verwendung als Isolationskörper eingesetzt werden. Diese Formkörper werden üblicherweise mit einer Kunststoff-Sperrfolie versehen, die verhindern soll, dass beim Auftragen des Estrichs Feuchtigkeit in den Bereich der Isolationsschicht gelangen kann. Damit soll insbesondere die Feuchte auf den Platten gehalten werden, damit vor allem selbst nivellierende Estriche den hohen Feuchtegehalt während des Einbaus als Flussmittel behalten und nicht unnötig viel Feuchte in die Bodenkonstruktion eindringt. Sperrfolie und Isolationsschicht sind dabei zur erleichterten Montage und aus Qualitätsgründen üblicherweise zumindest punktuell oder vielseitig fest miteinander verbunden.

Um mit einem derartigen prinzipiellen Aufbau eine besonders einfache Montage zu ermöglichen, kann das Ensemble aus Isolationskörper und aufgebrachter Sperrfolie als vorgefertigter Verbundkörper bereitgestellt werden, wobei bei der Montage derartige Verbundkörper lediglich noch geeignet zusammengesetzt werden müssen. Ein solcher Verbundkörper, bei dem der Isolationskörper den Grundkörper und die Absperrfolie ein dem Grundkörper zugeordnetes Funktionselement bilden, ist beispielsweise aus der DE 29 619 418 U1 bekannt. Die als Funktionselement dabei vorgesehene Absperrfolie kann bei diesem bekannten System durch Tiefziehen einer Formgebung unterzogen werden, wobei insbesondere durch diese Formgebung geeignete Rastelemente für die spätere Montage in das Funktionselement eingebracht werden können.

Das Tiefziehen ist eine weit verbreitete Technik zur Bearbeitung eines üblicherweise sich flach erstreckenden Rohlings, bei dem dieser einer Formgebung unterzogen wird. Der Rohling, beispielsweise eine Folie aus thermoplastischem Material, wird dabei zunächst erhitzt, so dass er sich geeignet verformen lässt, und dann üblicherweise zumindest in dem zu verformenden Bereich in ein Tiefziehwerkzeug eingebacht. Dieses weist üblicherweise in der Art eines Negativ- (oder ggf. auch eines Positiv-) Abdrucks eine der herzustellenden Form entsprechende Kontur auf. Durch Beaufschlagung mit einem Vakuum, beispielsweise durch geeignet vorgesehene Sauglöcher im Tiefziehwerkzeug, wird der Rohling sodann flächig an der Kontur des Tiefziehwerkzeugs angelegt, so dass er die Raumform dieser Kontur annimmt. Anschließend lässt man den solchermaßen verformten Rohling wieder erkalten, so dass er - beispielsweise aufgrund seiner thermoplastischen Eigenschaften - unter Beibehaltung der aufgebrachten Raumform erstarrt und die Raumform somit dauerhaft beibehält.

Das Vakuum-Tiefziehen, auch Vakuumformen oder Thermoforming genannt, kann somit als ein Verfahren des Umformens von Thermoplasten angesehen werden. Im Unterschied zum Spritzgießen, bei dem erhitzter Kunststoff in einen Hohlraum (Form) gespritzt wird, ist der Ausgangsstoff eine Kunststoffplatte oder -folie. Diese wird bis zum thermoelastischen (gummituch-ähnlichen) Zustand erwärmt und dann auf das Werkzeug gesaugt. Nach dem Abkühlen behält die verformte Platte bzw. Folie die gegebene Form. Beim Vakuumformen handelt es sich somit um eine besonders einfache Art des Kunststoffthermoformens. Man verwendet nur eine Form und Unterdruck, um die gewünschte Teilegeometrie zu erzielen. Das Verfahren eignet sich besonders für Teile, die nur auf einer Seite präzise geformt werden müssen, z. B. Passformverpackungen für Lebensmittel oder Elektronik.

Der Erfindung liegt die Aufgabe zugrunde, ein Verfahren der oben genannten Art anzugeben, mit dem eine besonders vereinfachte und effiziente Herstellung eines solchen Verbundkörpers ermöglicht wird.

Diese Aufgabe wird erfindungsgemäß gelöst, indem das Funktionselement in seiner Form durch Tiefziehen an den Grundkörper angepasst wird, wobei der Grundkörper als Tiefzieh-Werkzeug bei der formenden Bearbeitung des Funktionselements verwendet wird.

Die Erfindung geht von der Überlegung aus, dass bei der Formgebung des Funktionselements das Verfahren des Tiefziehens, insbesondere des Vakuum-Tiefziehens, bereits grundsätzlich als vergleichsweise effizient und auch im Rahmen einer Massenproduktion als kostengünstig und zuverlässig anzusehen ist. Ausgehend von dieser Annahme ist dann gemäß einem Aspekt der Erfindung eine Vereinfachung des Verfahrens möglich, indem für das ohnehin erforderliche Tiefzieh-Werkzeug von vornherein der Grundkörper des Verbundkörpers verwendet wird, so dass beim Tiefziehen "automatisch" eine - zur Bildung des Verbundkörpers grundsätzlich erwünschte - Formanpassung des Funktionselements an den Grundkörper erfolgt. Dies kann gemäß einem weiterführenden Aspekt der Erfindung insbesondere auch dazu genutzt werden, durch geeignete Formgebung beispielsweise in Form von Hinterschneidungen oder dergleichen bereits formseitig eine feste, für die spätere Weiterverarbeitung des Verbundkörpers geeignete Verbindung zwischen Grundkörper und Funktionselement zu erschaffen. Gemäß einem Aspekt der Erfindung kann somit der - vorzugsweise geeignet vorgeformte - Grundkörper in der Art einer "verlorenen Schalung" für die Formgebung des Funktionselements verwendet werden.

Vorteilhafte Ausgestaltungen der Erfindung sind Gegenstand der Unteransprüche.

In vorteilhafter Ausgestaltung wird für die Herstellung des Verbundkörpers ein Funktionselement verwendet, das aus einem thermoplastischen Kunststoff besteht. In besonders vorteilhafter Ausgestaltung, und insbesondere angepasst an den für den Verbundkörper vorgesehenen Einsatzzweck, wird dabei als Material für das Funktionselement ein Standardkunststoff, wie ABS, ASA, PMMA, PE, PP, PS, PC, PETG oder PVC, verwendet.

Gemäß einem als eigenständig erfinderisch angesehenen Aspekt wird als Grundkörper ein poröser Formkörper verwendet, wobei beim Tiefziehen des Funktionselements die Porosität des Grundkörpers zur Aufbringung des Vakuums zum Zweck der Verformung des Funktionselements genutzt wird. Die Nutzung poröser Formkörper als Tiefziehwerkzeug zur geeigneten Aufbringung des Vakuums ist beispielsweise aus der DE 10 313 495 A1 bekannt, wobei hier jedoch das Tiefziehwerkzeug nicht zur Verwendung als Komponente in einem herzustellenden Verbundkörper angedacht ist.

Gemäß einem weiteren, als eigenständig erfinderisch angesehenen Aspekt ist als Grundkörper ein Formkörper aus geschäumten Schaumperlen oder "Beads", vorzugsweise aus EPS oder expandiertem Polystyrol, vorgesehen. Schaumperlen oder Kugeln aus geschäumtem Kunststoff, allgemein auch als "Beads" bezeichnet, werden in einer Vielzahl von Anwendungen beispielsweise zur Herstellung von Formteilen verwendet, wobei die Formteile aus einer Vielzahl derartiger, miteinander versinterter oder verschweißter Schaumperlen gebildet werden. Sie bieten dabei eine besonders gute Basis für eine allgemein angestrebte Leichtbauweise, da sie einerseits eine vergleichsweise hohe mechanische Stabili-tät und andererseits - aufgrund des hohen Luftanteils im Material infolge der Auf-schäumung - eine sehr niedrige Dichte aufweisen.

Derartige Beads oder Schaumperlen werden üblicherweise aus verschiedenartigen Polymeren als Basismaterial hergestellt. Beispielsweise sind EPS, EPP, EPE, Co-polymere und Mischungen daraus (Blends) als Beads erhältlich. Derartige Schaumperlen werden üblicherweise in Formteilautomaten zu Formteilen, Platten oder Blöcken weiterverarbeitet, die in der Dämmstoff-, Automobil- oder Verpackungsindustrie oder auch in anderen technischen Anwendungen zum Einsatz kommen können.

Besonders gängig sind derzeit Schaumperlen oder Beads aus EPS (Expandiertes Polystyrol) oder EPP (expandiertes Polypropylen). EPS-Beads (Hartschaum) werden üblicherweise ungeschäumt als vorbegastes Polystyrol im Markt angeboten und von Endverarbeitern, insbesondere sogenannten Schäumbetrieben, mit Hilfe von Dampf zu Schaumkugeln verschiedener Dichte expandiert und dann in den Formteilautomaten verarbeitet. Im Bereich EPP (Weichschaum) werden hingegen so genannte Minipellets aus Polypropylen bereits beim Rohstofflieferanten auf die für den späteren Einsatz vorgesehene und geeignete Dichte expandiert, beispielsweise in einem Autoklav oder mittels Extrusionsverfahren mit direkter Begasung. Die dabei entstehenden geschäumten Kugeln oder Schaumperlen enthalten kein weiteres Treibmittel mehr und können direkt per Staudruckverfahren verarbeitet werden. Für geringe Dichten, d. h. im Sinne einer möglicherweise angestrebten extremen Leichtbauweise, können die Perlen mit Luftdruck nachbeladen (Druckerhöhung in den Schaumzellen) und ebenfalls mit Dampf nachexpandiert werden.

Die anschließende Verarbeitung im so genannten Formteilprozess findet üblicherweise in speziellen Formteilautomaten statt. Der eigentliche Verarbeitungsschritt besteht dabei darin, die Schaumpartikel mittels Dampfs (Dampftemperatur ca. 140 bis 165 °C - je nach Rohmaterialtyp) zumindest oberflächlich zu erweichen, damit sie versintern oder verschmelzen. Eine nachträgliche Bearbeitung (z. B. Entgraten) ist, anders als bei PUR-Schaumstoffteilen, bei EPP-Formteilen nicht üblich.

In der Vielzahl möglicher Anwendungen solcher aus miteinander versinterten oder verschweißten Schaumperlen gebildeten Formteile stehen üblicherweise jeweils individuell andere Materialeigenschaften im Vordergrund, die den Einsatz besonders attraktiv machen. Bei einer Verwendung als Dämmstoff, beispielsweise in Heizungen als Manschetten für Heizungsrohre oder Isolierung von Bauteilen, ist die flexible Formgebung in Kombination mit - aufgrund des hohen Luftanteils in den geschäumten Perlen - guten thermischen Isolationseigenschaften bedeutsam. Bei einem Einsatz als Formteil in der Automobilindustrie, beispielsweise als Füllerelement in Karosserieteilen, steht üblicherweise im Sinne der allgemein angestrebten Leichtbauweise in Kombination mit der ebenfalls allgemein angestrebten hohen passiven Sicherheit, die geringe Dichte in Kombination mit einer vergleichsweise hohen Schockabsorption im Vordergrund. Ein wiederum anderes Anwendungsspektrum bietet der Schaumstoff EPP, der vergleichsweise elastisch, stoßsicher und besonders angenehm anzufassen ist.

Wie sich nunmehr völlig überraschend herausgestellt hat, ist die bei der Herstellung von Formteilen aus solchen, insbesondere expandierten, Beads resultierende Porosität des Formteils in vielen Fällen völlig ausreichend, um die gemäß einem Aspekt der vorliegenden Erfindung vorgesehene Verwendung des Formteils als Tiefziehwerkzeug bei der Formgebung eines zugeordneten Funktionselements zu ermöglichen. Die Porosität des Formteils ist dabei als ein Ergebnis des Herstellungsprozesses durch Schäumen der Schaumperlen anzusehen, die sich bei ihrer Expansion kugelartig ausdehnen und infolge des Kontakts miteinander raumfüllend verformen. Bei dieser Verformung verbleiben jedoch geometriebedingt Zwischenräume zwischen den jeweiligen Beads innerhalb des Formkörpers, auch als so genannte "Zwickel" bezeichnet. Die hierdurch bedingte verbleibende Porosität in einem solchen Formkörper kann gemäß einem Aspekt der Erfindung somit zur Verwendung als Vakuumkanal während des Tiefzieh-Prozesses für das zugeordnete Funktionselement vorgesehen sein.

Gemäß einem weiteren Aspekt der Erfindung kann zudem bei einer vorgesehenen Verwendung von Formteilen aus geschäumtem Kunststoff mit vergleichsweise hoher Dichte, entsprechend einem vergleichsweise geringeren Volumenanteil der Zwickel im Formkörper, die Einbringung zusätzlicher Vakuumkanäle in den Formkörper vorgesehen sein. Dies kann gemäß einem Aspekt der Erfindung beispielsweise in einem dem Tiefziehprozess vorgelagerten Bearbeitungsschritt des als Grundkörper vorgesehenen Formteils erfolgen, in dem das Formteil (beispielsweise eine EPS-Platte hoher Dichte) mit einer Nadelwalze bearbeitet ("genadelt") wird.

In besonders vorteilhafter Weiterbildung wird nach dem Tiefziehen das geformte Funktionselement fest mit dem Grundkörper verbunden. Dies kann wie vorstehend beschrieben bereits durch geeignete Formgebung, beispielsweise mittels Hinterschneidungen, erfolgen, und/oder aber auch durch andere geeignete Verbindungsverfahren, insbesondere die Herstellung stoffschlüssiger Verbindungen wie beispielsweise Kleben oder Anschmelzen.

Ein Verbundkörper, umfassend einen Grundkörper und ein diesem zugeordnetes, an diesen in seiner Raumform angepasstes Funktionselement, erhältlich durch ein Verfahren der vorstehend beschriebenen Art, wird als eigenständig erfinderisch angesehen.

Ein Ausführungsbeispiel der Erfindung wird anhand einer Zeichnung näher erläutert. Darin zeigen:
- Fig. 1: einen Verbundkörper im Schnitt,
- Fig. 2: schematisch eine Sequenz von Herstellungsschritten des Grundkörpers des Verbundkörpers nach Fig. 1,
- Fig. 3: Schnittbilder einiger Varianten von EPS-Körpern, und
- Fig. 4: schematisch eine Sequenz von Herstellungsschritten bei der Verbindung von Grundkörper und Funktionselement zum Verbundkörper.

Gleiche Teile sind in allen Figuren mit denselben Bezugszeichen versehen.

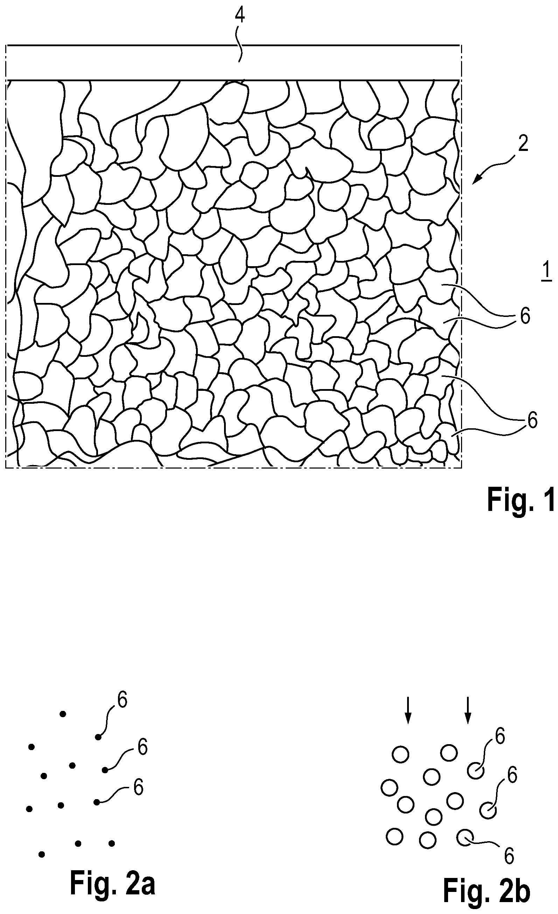

Der Verbundkörper 1 gem. Fig. 1 umfasst einen Grundkörper 2 und ein an diesem angeordnetes Funktionselement 4. Im Ausführungsbeispiel ist der Grundkörper 2 dabei als aus einer Vielzahl von miteinander versinterten oder auf sonstige Weise miteinander verklebten expandierten Schaumperlen 6 bestehendes Formteil ausgeführt, das für eine Vielzahl von Anwendungen wie beispielsweise als Wärmeisolationselement geeignet ist. Das zugeordnete Funktionselement 4 ist im Ausführungsbeispiel als Sperrfolie ausgestaltet. Der Verbundkörper 1 kann somit beispielsweise als Isolationskörper für Fußbodenheizungen vorgesehen sein, insbesondere zur Wärme- und/oder Trittschallisolation. Das als Kunststoff-Sperrfolie ausgeführte Funktionselement 4 soll dabei insbesondere bei der Montage oder beim Anbringen des Verbundkörpers 1 verhindern, dass beim nachfolgenden Auftragen von Estrich Feuchtigkeit in den Bereich des eigentlichen Isolationskörpers 2 gelangen kann.

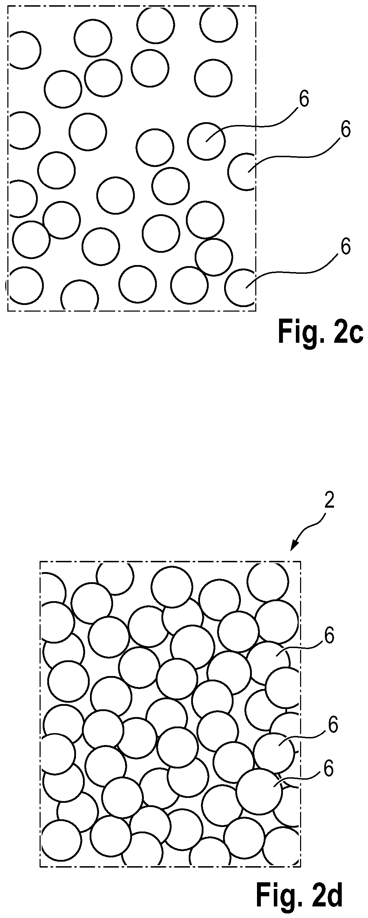

Die Schaumperlen 6 sind im Ausführungsbeispiel aus Polystyrol (PS) hergestellt. Bei der Herstellung des den Grundkörper 2 bildenden Formteils, die in einer Sequenz von Schritten in Fig.2 skizzenhaft gezeigt ist, werden die Schaumperlen 6 zunächst vorgeheizt (Fig. 2a) und mit Dampf beaufschlagt und damit vorgeschäumt (Fig. 2b). Anschließend oder nach dem Lagern werden sie in einem geeigneten formgebenden Behältnis unter Beaufschlagung mit Dampf weiter aufgeschäumt und damit expandiert und miteinander zum eigentlichen Formteil verschweißt oder versintert (Fig. 2c). Insbesondere werden die Schaumperlen 6 in diesem Schritt nach dem Lagern in eine feste Form geschüttet, deren Volumen das gewünschte Formteil darstellt. Durch die Formwände führen kleine Bohrungen, durch die man Wasserdampf von 100 bis 120°C bläst und damit die Luft in den Zwischenräumen zwischen den Schaumperlen 6, den so genannten Zwickeln, verdrängt, die dann durch die Bohrungen entweicht. Die Schaumpartikel erhitzen sich, und erst dann vergrößern sie sich durch das Begasen mit Wasserdampf innerhalb von 0,5 bis 3 min um etwa einen Faktor zwei im Volumen. Dabei verformen sich die Partikel und füllen die Leerräume, die Zwickel zwischen den Kugeln, aus, durch die der heizende Dampf geströmt wird. Die Schaum-Partikel verschweißen zu einem Fertigteil, das sich bei Abkühlung verfestigt. Schließlich kann das erhaltene, fertiggestellte Formteil abgekühlt und für eine weitere Verwendung bereitgestellt werden (Fig. 2d). Der von diesem Formteil gebildete Grundkörper 2 besteht somit im Ausführungsbeispiel aus expandiertem Polystyrol (EPS).

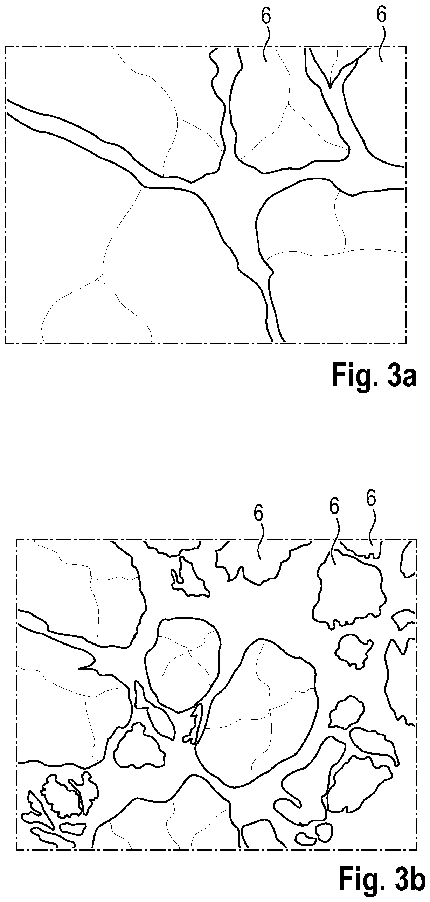

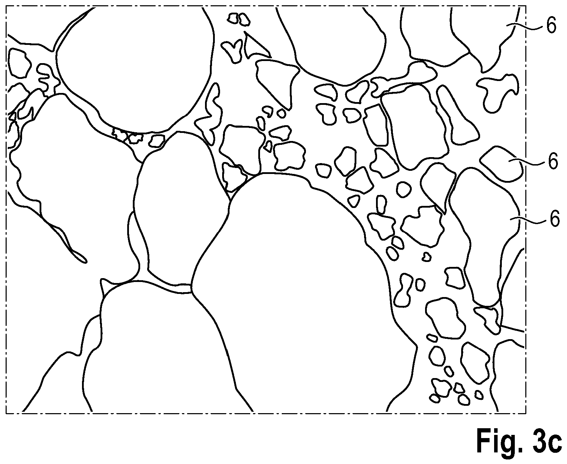

Das durch ein solches Versintern oder Verschweißen einer Vielzahl von Schaumperlen 6 erhältliche Formteil 2 ist in Fig. 2d gezeigt. Die vorwiegend stoffschlüssige Verbindung benachbarter Schaumperlen 6 miteinander erfolgt dabei über ihre jeweilige Außenhaut. Das Formteil oder der Grundkörper 2 nimmt somit nach seiner Herstellung die in Fig. 2d im Schnitt gezeigte Matrixstruktur an, bei der eine Vielzahl der Schaumperlen 6 durch das Verschmelzen, Versintern oder Verschweißen ihrer Außenhäute miteinander verbunden sind. Allgemein ist für die Schäum-und Schaumstoffeigenschaften und somit die Anwendungsmöglichkeiten eines solchen EPS-Körpers neben dem Polymergerüst, dem eingesetzten Treibmittel und der Perlgröße die Schaumstruktur besonders wichtig. Die Schaumstruktur, also die Homogenität und die Größe der einzelnen Zellen, bestimmt Schäumeigenschaften wie Expandierbarkeit und Druckabbauzeit sowie Schaumstoffeigenschaften wie beispielsweise die Oberflächengüte. Wie den Schnittbildern gem. Fig. 3 entnehmbar ist, zeigt EPS auf Basis von reinem Polystyrol eine vergleichsweise grobe und ungleichmäßige Schaumstruktur (Fig. 3a) mit etwa 5 Zellen pro mm. Durch Zugabe von geeigneten Keimbildnern kann die Bläschenbildung an den Keimbildnergrenzflächen energetisch begünstigt werden, und homogene, mehr oder weniger feinzellige Schäume können erhalten werden (Figs. 3b, 3c). Besonders geeignete Keimbildner sind feinverteilte Wassertröpfchen, die durch gleichmäßig verteilte oberflächenaktive oder hydrophile Substanzen eingeschleppt werden.

Zur Herstellung des Verbundkörpers 1 wird ein solcher EPS-Grundkörper 2 mit dem zugeordneten Funktionselement 4 verbunden. Das Funktionselement 4 wird dabei aus einer Kunststofffolie oder Kunststoffplatte aus einem Standardkunststoff, vorzugsweise aus ABS, ASA, PMMA, PE, PP, PS, PC, PETG oder PVC, durch Vakuum-Tiefziehen hergestellt. Gemäß einem Aspekt der Erfindung und im Sinne eines besonders effizienten und kostengünstigen Herstellungsprozesses wird dabei der Grundkörper 2 selbst als Tiefzieh-Werkzeug verwendet, wobei zur Aufbringung des zur Formgebung notwendigen Vakuums auf die erhitzte Kunststofffolie oder -platte die durch die verbliebenen Zwickel im Grundkörper 2 gegebene Porosität des Grundkörpers 2 genutzt wird.

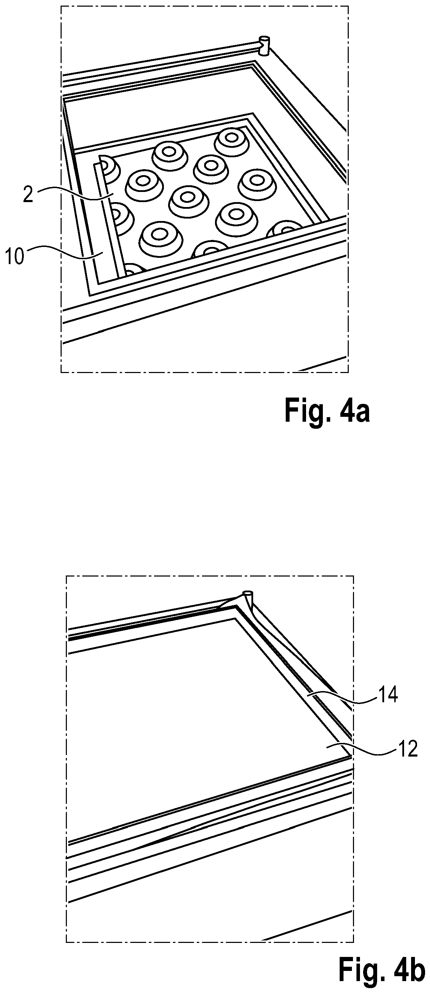

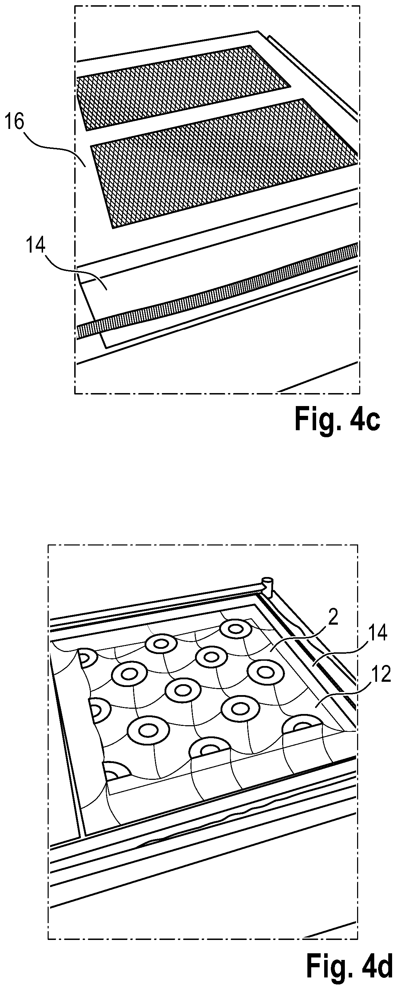

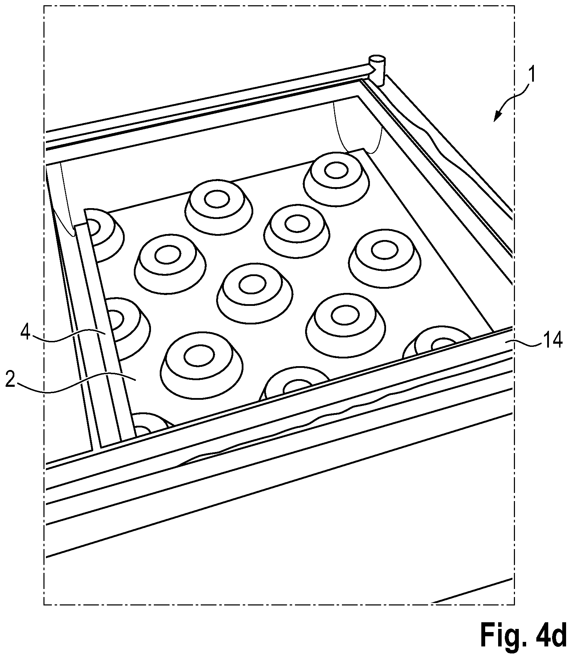

Im einzelnen ist die Herstellung des Verbundkörpers 1 anhand einer Sequenz von Schritten in Fig. 4 dargestellt. Zunächst wird der poröse Grundkörper 2 aus EPS in der Art eines formgebenden Werkzeugs in eine für den Tiefziehvorgang vorgesehene Vakuumkammer 10 eingelegt (Fig. 4a). Anschließend kann oberseitig der Vakuumkammer 10 eine Kunststofffolie oder, wie dargestellt, eine Kunststoffplatte 12 in einen Rahmen 14 gespannt und festgezogen werden (Fig. 4b). In einem nächsten Schritt (Erhitzen) wird eine Heizeinrichtung 16 an oder auf der Kunststoffplatte 12 positioniert (Fig. 4c). Durch diese Hitzequelle wird der Kunststoff erweicht, bis er die passende Temperatur erreicht und biegsam und verformbar wird.

Der erhitzte und somit biegsame und verformbare Kunststoff anschließend mit dem darunterliegenden, als Tiefziehwerkzeug vorgesehenen Grundkörper 2 in Kontakt gebracht, wobei er sich bereits grob verformt und an Konturen des Grundkörpers 2 anpasst (Fig. 4d). Der eigentliche Verformungsschritt durch Vakuum-Tiefziehen erfolgt aber erst anschließend, wenn mittels einer geeigneten Unterdruckpumpe Vakuum angelegt wird. Diese wird unter Nutzung der Porosität des Grundkörpers 2 durch diesen hindurch angelegt und bewirkt eine hochgenaue Anpassung der Raumform der erhitzten Kunststoffplatte 12 an die Oberflächenkontur des Grundkörpers 2 (Fig. 4e).

Nachdem sich der Kunststoff in oder um die durch den Grundkörper 2 gegebene Form geschmiegt hat, erfolgt die Abkühlung. Sobald der Kunststoff abgekühlt ist, kann er gemeinsam mit dem Grundkörper 2, mit dem er nun zur Bildung des Verbundkörpers 1 fest verbunden ist, aus dem Rahmen 14 entnommen und einer weiteren Bearbeitung, beispielsweise einem Zuschneiden, zugeführt werden.

Der während der formgebenden Bearbeitung der das Funktionselement 4 bildenden Kunststoffplatte 12 als Tiefzieh-Werkzeug verwendete Grundkörper 2 verbleibt somit in der Art einer "verlorenen Schalung" mit dem Funktionselement 4.

Wie sich überraschend herausgestellt hat, ist die Porosität von EPS-Körpern gängiger Dichte ausreichend, um die vorstehend erläuterte Vorgehensweise, nämlich die Nutzung eines EPS-Grundkörpers 2 als Tiefziehwerkzeug zur Formgebung eines zugeordneten Funktionselements 4, auf einfache und wirkungsvolle Weise zu ermöglichen. In einer als eigenständig erfinderisch angesehenen Weiterentwicklung kann es aber auch vorgesehen sein, einen EPS-Körper vergleichsweise hoher Dichte und entsprechend geringerer Porosität, die für die Durchleitung des Vakuums möglicherweise nicht ausreichen könnte, für die genannte Vorgehensweise geeignet zu ertüchtigen. Dabei kann gemäß einem Aspekt dieser Erfindung beispielsweise vorgesehen sein, mittels einer Nadelwalze oder einer anderen geeigneten Perforierungseinrichtung eine Vielzahl von Kanälen oder Durchbrüchen in den EPS-Körper einzubringen, über die beim Tiefziehen das Vakuum aufgebracht werden kann.

### Bezugszeichenliste

- 1: Verbundkörper
- 2: Grundkörper
- 4: Funktionselement
- 6: Schaumperle
- 10: Vakuumkammer
- 12: Kunststoffplatte
- 14: Rahmen
- 16: Heizeinrichtung

## Patentansprüche

1. Verfahren zur Herstellung eines Verbundkörpers (1), der einen Grundkörper (2) und ein an diesem angeordnetes Funktionselement (4) umfasst, wobei das Funktionselement (4) in seiner Form durch Tiefziehen an den Grundkörper (2) angepasst wird, und wobei der Grundkörper (2) als Tiefzieh-Werkzeug bei der formenden Bearbeitung des Funktionselements (4) verwendet wird.

2. Verfahren nach Anspruch 1, bei dem das Funktionselement (4) aus einem thermoplastischen Kunststoff besteht.

3. Verfahren nach Anspruch 1 oder 2, bei dem als Grundkörper (2) ein poröser Formkörper verwendet wird, wobei beim Tiefziehen des Funktionselements (4) die Porosität des Grundkörpers (2) zur Aufbringung des Vakuums zum Zweck der Verformung des Funktionselements (4) genutzt wird.

4. Verfahren nach einem der Ansprüche 1 bis 3, bei dem als Grundkörper (2) ein Formkörper aus EPS oder expandiertem Polystyrol verwendet wird.

5. Verfahren nach einem der Ansprüche 1 bis 4, bei dem nach dem Tiefziehen das geformte Funktionselement (4) fest mit dem Grundkörper verbunden wird.

6. Verbundkörper (1), umfassend einen Grundkörper (2) und ein diesem zugeordnetes, an diesen in seiner Raumform angepasstes Funktionselement (4), erhältlich durch ein Verfahren nach einem der Ansprüche 1 bis 4.
